# EUROPEAN PATENT SPECIFICATION

(11) **EP 2 813 310 B1**
(45) Date of publication and mention of the grant of the patent: **23.08.2017**
(21) Application number: 14171777.7
(22) Date of filing: 10.06.2014
(51) Int. Cl.: B23D 59/00, B23Q 11/00

(54) **Saw with blower housing**
Säge mit Gebläsegehäuse
Scie avec carter de ventilateur

(30) Priority: 13.06.2013 US 201313917210
(43) Date of publication of application: 17.12.2014
(73) Proprietor: Black & Decker Inc., Newark, Delaware 19711 (US)
(72) Inventor: Dyer, Kelly E., Silver Spring, MD Maryland 20902 (US)
(74) Representative: SBD IPAdmin

(56) References cited:
- EP-A2- 1 415 746
- DE-A1-102009 055 411
- JP-A- 2003 011 101
- JP-U- S55 154 101
- US-A- 3 873 862
- US-A- 5 084 971
- US-A1- 2005 160 608

## Description

The present invention relates to a saw according to the preamble of claim 1, in particular a circular saw, having a blower housing. Such a saw is known from DE102009055411A1.

A motor-driven power tool, such as a circular saw, may include a fan that rotates with the motor to force air across one or more motor components to cool the motor. It may be desirable to channel the forced air to a location at or near a location at which a blade (or other cutting or material-removal tool) of the blade makes contact with a workpiece. In this manner, the forced air may blow saw dust, chips and/or other cuttings away from the location at which the blade makes contact with the workpiece to maintain a clearer line of sight of a cut line in the workpiece. According to the invention, a saw defined by the features of claim 1 is provided. Further preferred embodiments are defined by the features of dependent claims 2-12. Further areas of applicability will become apparent from the description provided herein. The description and specific examples in this summary are intended for purposes of illustration.

The drawings described herein are for illustrative purposes only of selected embodiments and not all possible implementations.
Figure 1 is a perspective view of a circular saw according to the present invention;
Figure 2 is another perspective view of the circular saw of Figure 1 with blade guards removed;
Figure 3 is an exploded perspective view of the circular saw of Figure 1;
Figure 4 is a an exploded perspective view of a motor assembly and blower housing of the circular saw;
Figure 5 is a side view of the motor assembly and blower housing of Figure 4;
Figure 6 is a top plan view of the circular saw;
Figure 7 is a top plan view of the circular saw with an outer housing and blade guards removed;
Figure 8 is a cross-sectional view of the circular saw taken through line 8-8 of Figure 6; and
Figure 9 is a cross-sectional view of the circular saw taken through line 9-9 of Figure 6.

Corresponding reference numerals indicate corresponding parts throughout the several views of the drawings.

Example embodiments of the invention will now be described more fully with reference to the accompanying drawings.

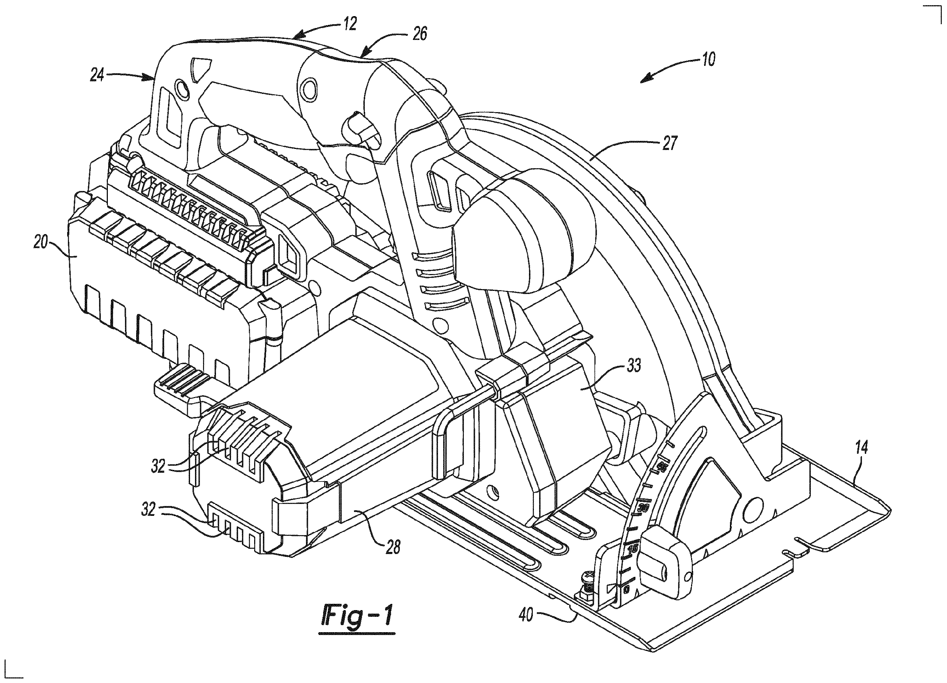

With reference to Figures 1-9, a circular saw 10 is provided that may include an outer housing 12, a shoe 14, a motor assembly 16 and a blower assembly 18. The motor assembly 16 may receive electrical current from a battery 20 and may drive a blade 22. It will be appreciated, however, that the circular saw 10 could be a plug-in saw, in which case the motor assembly 16 may receive electrical current from a power cord plugged into a wall outlet or a generator, for example. As will be subsequently described, the blower assembly 18 may be operable to generate a flow of air and direct the flow of air to a location at or near the blade 22 to blow saw dust, chips and/or other cuttings away from a location at which the blade 22 contacts a workpiece during operation of the circular saw 10.

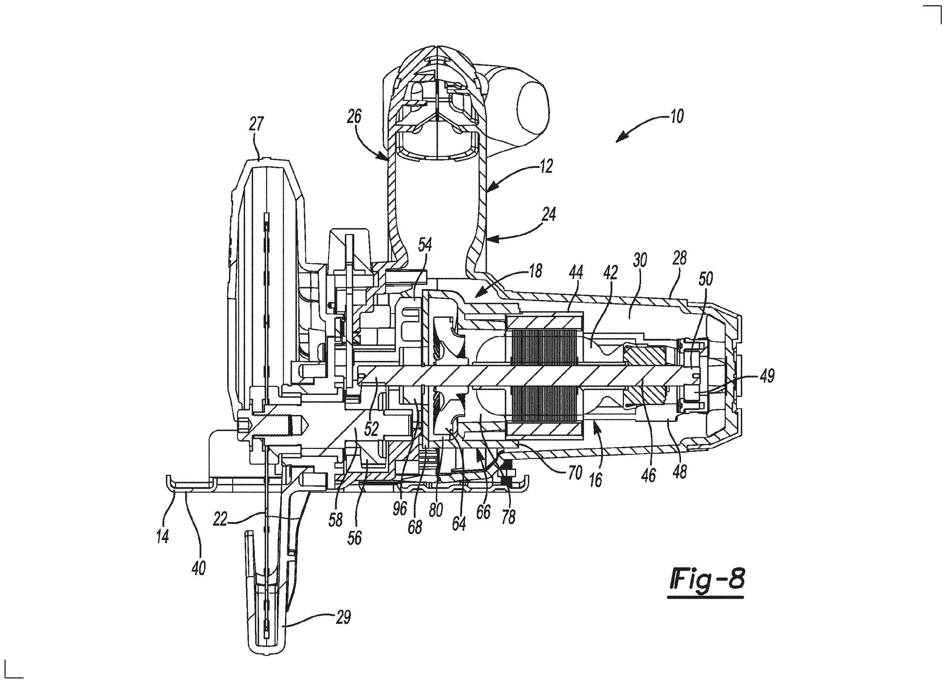

The outer housing 12 may include a first shell portion 24 and a second shell portion 26 that cooperate to enclose the motor assembly 16 and blower assembly 18. Upper and lower blade guards 27, 29 may be attached the outer housing 12 and may partially enclose the blade 22. The first shell portion 24 may include a motor housing 28 that defines a first cavity 30 (Figure 8) in which at least a portion of the motor assembly 16 is disposed. A distal end of the motor housing 28 may include one or more first vent openings 32 through which air from the ambient environment may be drawn into the first cavity 30.

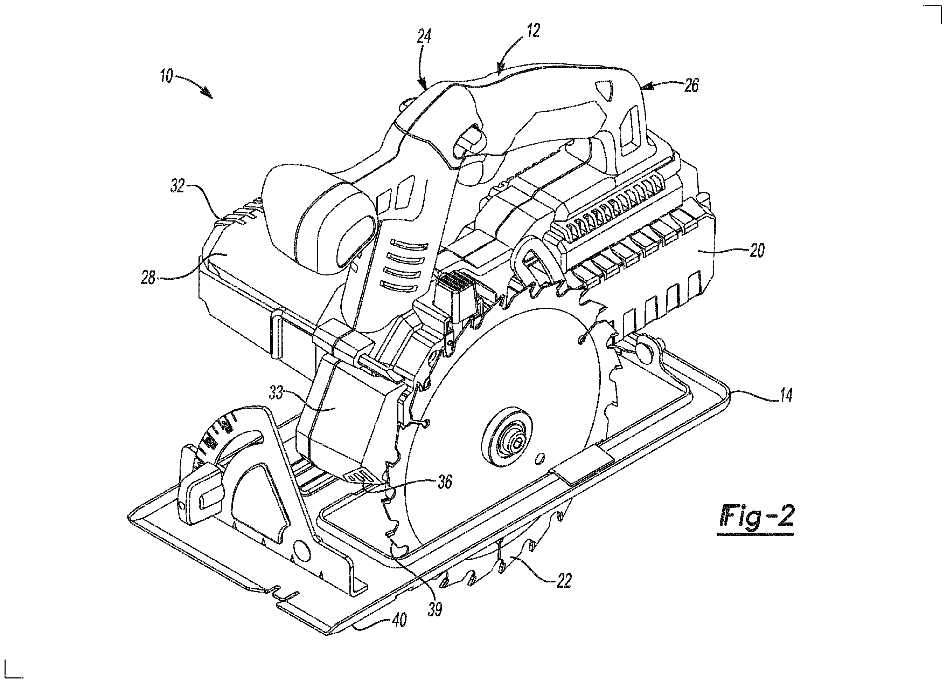

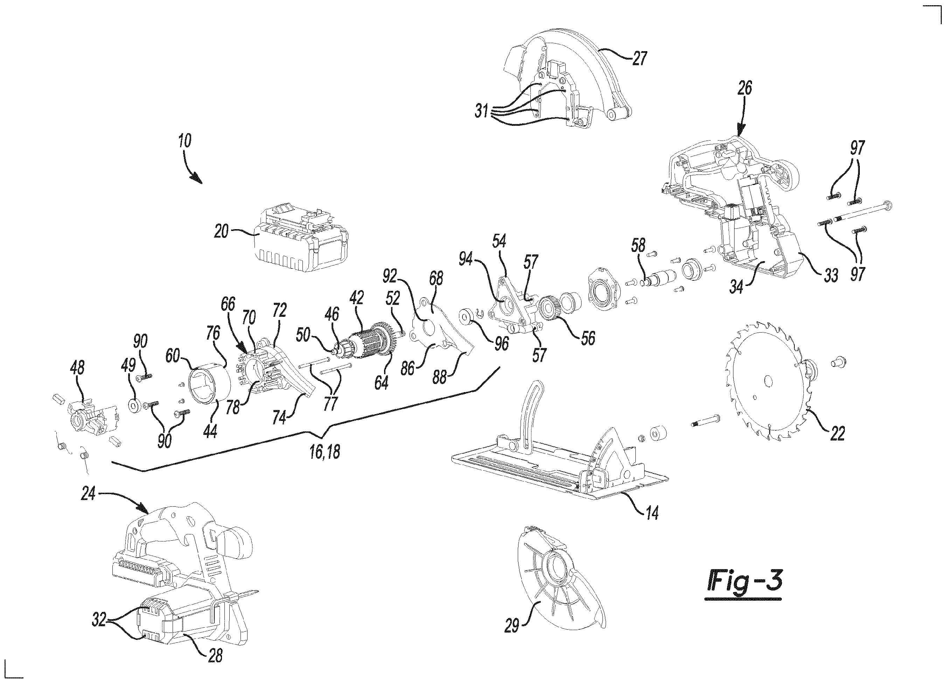

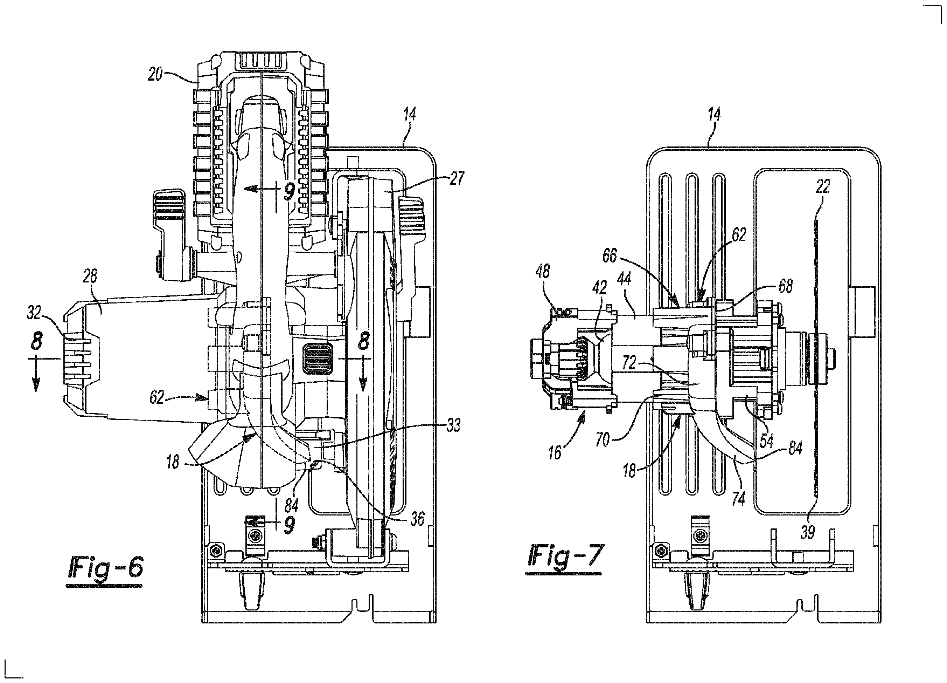

The second shell portion 26 includes a lower portion 33 defining a second cavity 34 (Figure 3) and one or more second vent openings 36 (Figures 2 and 6). The second cavity 34 is in communication with the first cavity 30 and the second vent openings 36. In this manner, air from the ambient environment is allowed to flow through the first vent openings 32 to the first cavity 30, into the second cavity 34 (via the blower assembly 18, as will be subsequently described), and exit through the second vent openings 36 to the ambient environment. The second vent openings 36 may be configured to direct air flowing therethrough to a location at or proximate an intersection between an outer radial edge 39 of the blade 22 and a plane defined by a bottom face 40 of the shoe 14.

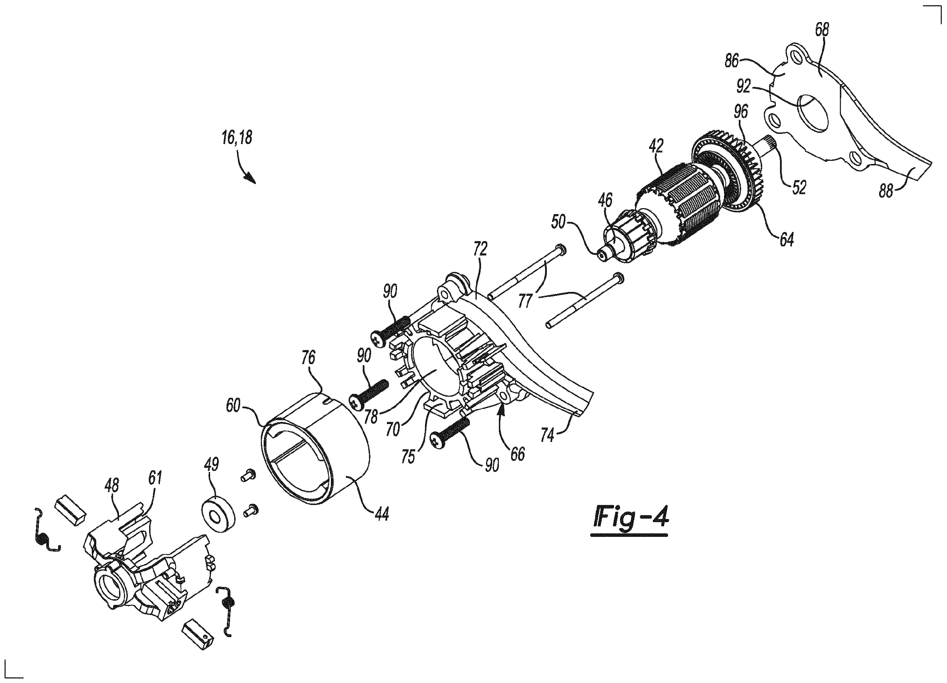

As shown in Figures 3-5, the motor assembly 16 may include a rotor or armature 42, a stator or magnet ring 44, a driveshaft 46, and a support member 48. The rotor 42 may be fixedly attached to the driveshaft 46 for rotation relative to the stator 44. The stator 44 may be coaxial with the driveshaft 46 and rotor 42 and may surround a portion of the driveshaft 46 and rotor 42. The support member 48 may be disposed within the first cavity 30 of the motor housing 28 and may house a bearing 49 (Figures 4 and 8) that supports a first end 50 of the driveshaft 46 for rotation relative to the motor housing 28 and stator 44. A gear case 54 (Figures 3, 7 and 8) fixed within the lower portion 33 of the second shell portion 26 may rotatably support a second end 52 of the driveshaft 46. The second end 52 of the driveshaft 46 may include gear teeth that meshingly engage a gear 56 (Figures 3 and 8) disposed within the gear case 54. The gear 56 may engage a shaft 58 that protrudes through the lower portion 33 of the second shell portion 26 and engages the blade 22. In this manner, rotation of the rotor 42 and driveshaft 46 is transmitted to the blade 22 through the gear 56 and shaft 58. The support member 48 may fixedly engage a first axial end 60 of the stator 44. In some embodiments, the first axial end 60 may be received in slots 61 (Figure 4) of the support member 48.

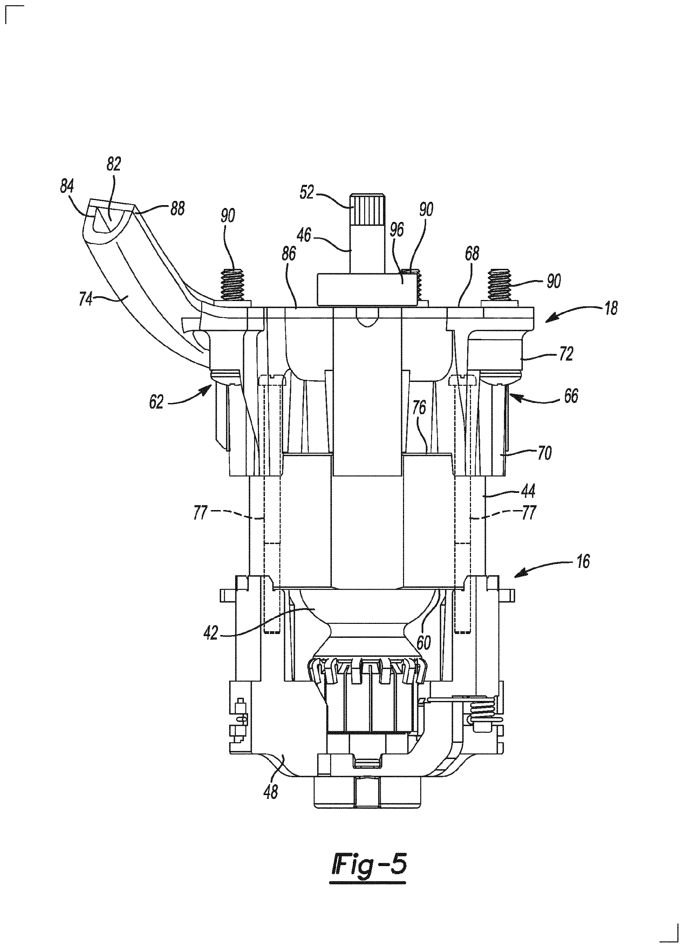

The blower assembly 18 includes a blower housing 62 and a fan 64 that is disposed within the blower housing 62 and is rotatable therein. The blower housing 62 includes a baffle 66 and may include a plate 68. As shown in Figures 4 and 5, the baffle 66 includes a stem portion 70, a body portion 72 and a chute 74. According to the invention, the stem portion 70, body portion 72 and chute 74 are integrally formed as a monolithic body. The stem portion 70 may fixedly engage a second axial end 76 of the stator 44 so that the stator 44 is sandwiched between the stem portion 70 and the support member 48, thereby fixing the stator 44 relative to the motor housing 28. In some embodiments, the second axial end 76 may be received in slots 75 (Figure 4) of the stem portion 70.

As shown in Figure 5, fasteners 77 may extend through bolt holes in the baffle 66 and through an inner opening of the stator 44 (e.g., the inner opening defined by the inner diameter of the stator 44) and threadably engage the support member 48. Tightening the fasteners 77 may clamp the stator 44 between the baffle 66 and the support member 48. As shown in Figure 8, the stem portion 70 and the support member 48 support the stator 44 so that the stator 44 is spaced apart from the motor housing 28.

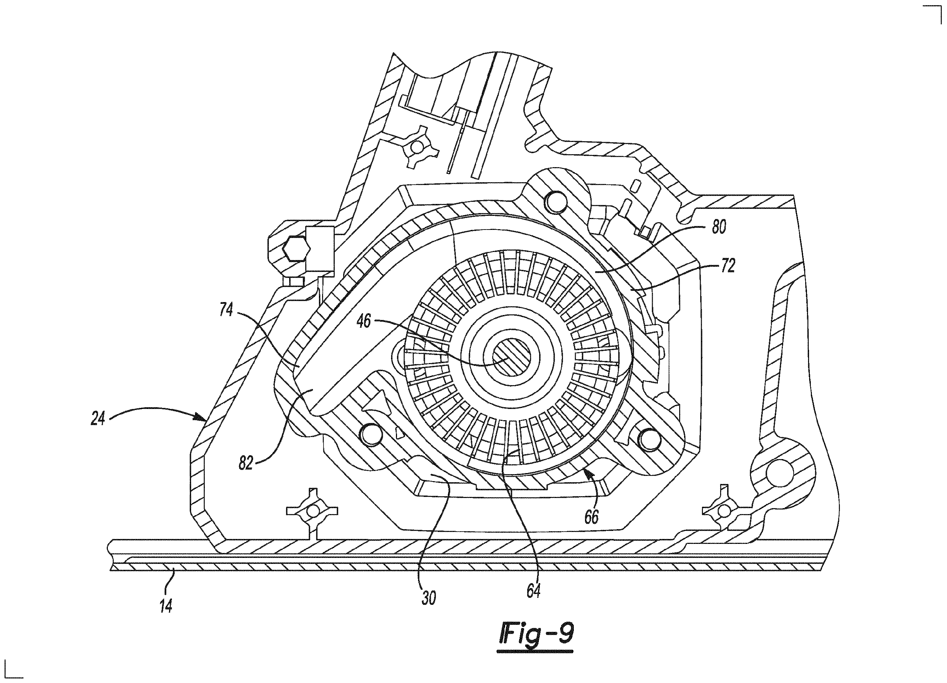

The stem portion 70 may include an opening 78 extending therethrough that may be coaxial with the stator 44 and driveshaft 46. The opening 78 may be in fluid communication with a recess 80 (Figures 8 and 9) formed in the body portion 72. The chute 74 may define a fluid passageway 82 that is in fluid communication with the recess 80 and extends tangentially outward from the recess 80 (as shown in Figure 9). The chute 74 and passageway 82 may include a generally corkscrew or helical shape such that the chute 74 and passageway 82 curve around a rotational axis of the driveshaft 46 as the chute 74 and passageway 82 curve away from a plane in which the fan 64 rotates (as shown in Figures 5, 7 and 9). As shown in Figure 6, an outlet 84 of the chute 74 may be disposed adjacent the second vent openings 36 so that air flowing through the passageway 82 is directed through the second vent openings 36.

The plate 68 may include a body portion 86 and a chute cover 88 integrally formed with and extending outward from the body portion 86. The plate 68 may be secured to the baffle 66 by a plurality of fasteners 90, for example, such that the body portion 86 substantially encloses the fan 64 within the recess 80 and the chute cover 88 cooperates with the chute 74 to define the passageway 82. The fasteners 90 may threadably engage the gear case 54, thereby fixing the blower housing 62 relative to the gear case 54. The body portion 86 includes an aperture 92 through which the driveshaft 46 extends. The aperture 92 may be aligned with an aperture 94 (Figure 3) in the gear case 54 that houses a driveshaft bearing 96 rotatably supporting the second end 52 of the driveshaft 46.

Fasteners 97 (Figure 3) may extend through apertures 31 in the upper blade guard 27 and threadably engage apertures 57 of the gear case 54. The upper blade guard 27 may be fixed to the second shell portion 26 by fasteners, for example, thereby fixing the gear case 54 relative to the second shell portion 26 and the upper blade guard 27.

The fan 64 may be fixed to the driveshaft 46 and may rotate within the recess 80. In this manner, when the motor assembly 16 is operating (i.e., when the rotor 42 and driveshaft 46 are rotating relative to the stator 44), the fan 64 will rotate with the driveshaft 46 and draw air through the first vent openings 32 and into the first cavity 30. From the first cavity 30, the fan 64 may draw the air in an axial direction between the stator 44 and rotor 42 (thereby cooling the stator 44 and rotor 42), through the opening 78, and into the recess 80. The fan 64 may force the air radially outward through the recess 80 and into the passageway 82 of the chute 74. The air is then forced through the passageway 82 and subsequently out of the outer housing 12 through the second vent openings 36. The air forced through the second vent openings 36 may blow saw dust, chips and/or other cuttings away from a location at which the blade 22 makes contact with a workpiece to maintain a clearer line of sight of the cut line that the user is making in the workpiece.

The shape and construction of the blower housing 62 described above provides an efficient airflow path from the first vent openings 32 to the second vent openings 36. That is, a stronger flow of air is provided through the second vent openings 36 while reducing the drag on the motor assembly 16. For example, providing the fan 64 in the recess 80 between the baffle 66 and the plate 68 helps the fan 64 eject the air in a radial direction to reduce unnecessary recirculation of the air within the motor housing 28. Further, the tangential transition between the recess 80 and the passageway 82 through the chute 74 and the generally corkscrew or helical shape of the passageway 82 reduces turbulence and efficiently delivers the air to the location proximate the blade 22. Furthermore, because the space between the stator 44 and the rotor 42 is a part of the airflow path between the first and second vent openings 32, 36, the airflow path provides the dual purposes of cooling the motor assembly 16 and removing saw dust, chips and/or other cuttings from the cut line during operation of the circular saw 10.

While the motor assembly 16 and blower assembly 18 are described above as being incorporated into a circular saw 10, it will be appreciated that the motor assembly 16 and blower assembly 18 could be incorporated into any other type of saws, such as a jigsaw or a reciprocating saw (saber saw), for example. As such, the present invention is not limited to circular saws.

## Claims

1. A saw (10) comprising:
a housing (12) having first (32) and second (36) vents;
a motor (16) disposed within the housing and including a stationary member (44) and a rotatable member (42);
a fan (64) attached to the rotatable member and rotatable therewith relative to the housing; and
a blower housing (62) disposed within the housing and including a baffle (66), the baffle including a stem (70), a body (72) and a chute (74), the stem engaging the stationary member of the motor and including an opening (82) extending therethrough, the body including a recess (80) in communication with the opening and the chute, the fan being rotatable within the recess;
wherein the housing and the blower housing cooperate to define an airflow pathway through which air is forced by the fan in use, the airflow pathway extending from the first vent, between the stationary and rotatable members of the motor, and through each of the opening, the recess, the chute and the second vent;
**characterised in that** the stem (70), body (72) and chute (74) form a monolithic body.

2. The saw (10) of Claim 1, wherein the chute (74) extends substantially tangentially from the body (72).

3. The saw (10) of Claim 1 or Claim 2, wherein at least part of the chute (74) extends in a curve at least partially around a rotational axis of the fan (64).

4. The saw (10) of any preceding claims, wherein at least part of the chute (74) extends in a curve away from a plane in which the fan (64) is arranged to rotate.

5. The saw (10) of any preceding claim, further comprising a support member (48) disposed within the housing (12) and supporting a first end of the rotatable member (42) for rotation relative to the housing, wherein the stationary member (44) is sandwiched between and directly contacts the baffle (66) and the support member.

6. The saw (10) of Claim 5, further comprising a plurality of fasteners (77) that directly engage the baffle (66) and directly engage the support member (48).

7. The saw (10) of Claim 6, wherein the stationary member (44) cooperates with the rotatable member (42) to define an annular passageway, and wherein the fasteners (77) extend through the annular passageway.

8. The saw (10) of any one of Claims 5 to 7, wherein the support member (48) supports a bearing (49) that rotatably supports the driveshaft (46).

9. The saw (10) of any preceding claim, further comprising a blade (22) arranged to be driven by the motor (16), wherein an outlet (84) of the chute (74), and the second vent (36), face a location that is radially outward relative to a radially outer cutting edge of the blade.

10. The saw (10) of any preceding claim, wherein the fan (64) is disposed at a first longitudinal end of the motor (16) and the first vent (32) is disposed adjacent a second longitudinal end of the motor.

11. The saw (10) of any preceding claim, wherein the stationary member (44) is an annular member surrounding the rotatable member (42), and wherein the stationary member and the rotatable member define an annular passageway through which the air flows in response to rotation of the fan (64).

12. The saw (10) of any preceding claim, wherein the blower housing (62) also includes a plate (68) which is fastened to the baffle (66) to enclose the fan (64) within the recess (80).

## Patentansprüche

1. Säge (10) umfassend:
ein Gehäuse (12), das erste (32) und zweite (36) Entlüftungen aufweist;
einen Motor (16), der innerhalb des Gehäuses angeordnet ist und ein stationäres Element (44) und ein drehbares Element (42) aufweist;
einen Ventilator (64), der an dem drehbaren Element befestigt ist und dadurch relativ zu dem Gehäuse drehbar ist; und
ein Gebläsegehäuse (62), das in dem Gehäuse angeordnet ist, und das eine Ablenkplatte (66) aufweist, wobei die Ablenkplatte einen Schaft (70), einen Körper (72) und eine Rutsche (74) aufweist, wobei der Schaft mit dem stationären Element des Motors in Eingriff steht und eine Öffnung (82) umfasst, die sich dort hindurch erstreckt, wobei der Körper eine Aussparung (80) aufweist, die mit der Öffnung und der Rutsche in Verbindung steht, wobei der Ventilator innerhalb der Aussparung drehbar ist;
wobei das Gehäuse und das Gebläsegehäuse zusammenwirken, um einen Luftströmungsweg zu definieren, durch den Luft durch den im Betrieb befindlichen Ventilator gezwungen wird, wobei sich der Luftströmungsweg von der ersten Entlüftung zwischen den stationären und drehbaren Elementen des Motors und durch jede der Öffnungen, die Aussparung, die Rutsche und die zweite Entlüftung erstreckt;
**dadurch gekennzeichnet, dass** der Schaft (70), der Körper (72) und die Rutsche (74) einen monolithischen Körper bilden.

2. Säge (10) nach Anspruch 1, wobei sich die Rutsche (74) im Wesentlichen tangential vom Körper (72) erstreckt.

3. Säge (10) nach Anspruch 1 oder Anspruch 2, wobei sich zumindest ein Teil der Rutsche (74) zumindest teilweise um eine Drehachse des Ventilators (64) in einer Kurve erstreckt.

4. Säge (10) nach einem der vorstehenden Ansprüche, wobei sich zumindest ein Teil der Rutsche (74) in einer Kurve von einer Ebene weg erstreckt, in der der Ventilator (64) angeordnet ist, um sich zu drehen.

5. Säge (10) nach einem der vorstehenden Ansprüche, weiter umfassend ein Stützelement (48), das in dem Gehäuse (12) angeordnet ist und das ein erstes Ende des drehbaren Elements (42) zur Drehung relativ zum Gehäuse lagert, wobei das stationäre Element (44) zwischen der Ablenkplatte (66) und dem Stützelement angeordnet ist und diese direkt berührt.

6. Säge (10) nach Anspruch 5, weiter umfassend eine Vielzahl von Befestigungselementen (77), die direkt mit der Ablenkplatte (66) in Eingriff stehen und direkt mit dem Stützelement (48) in Eingriff stehen.

7. Säge (10) nach Anspruch 6, wobei das stationäre Element (44) mit dem drehbaren Element (42) zusammenwirkt, um einen ringförmigen Durchgang zu definieren, und wobei sich die Befestigungselemente (77) durch den ringförmigen Durchgang erstrecken.

8. Säge (10) nach einem der Ansprüche 5 bis 7, wobei das Stützglied (48) ein Lager (49) trägt, das die Antriebswelle (46) drehbar lagert.

9. Säge (10) nach einem der vorstehenden Ansprüche, weiter umfassend, eine Klinge (22), die eingerichtet ist, um durch den Motor (16) angetrieben zu werden, wobei ein Auslass (84) der Rutsche (74) und die zweite Entlüftung (36), einem Ort gegenüberliegen, der radial nach außen relativ zu einer radial äußeren Schneidkante der Klinge ist.

10. Säge (10) nach einem der vorstehenden Ansprüche, wobei der Ventilator (64) an einem ersten Längsende des Motors (16) angeordnet ist und die erste Entlüftung (32) angrenzend an ein zweites Längsende des Motors angeordnet ist.

11. Säge (10) nach einem der vorstehenden Ansprüche, wobei das stationäre Element (44) ein ringförmiges Element ist, das das drehbare Element (42) umgibt, und wobei das stationäre Element und das drehbare Element einen ringförmigen Durchgang definieren, durch den die Luft als Resultat der Drehung des Ventilators (64) strömt.

12. Säge (10) nach einem der vorstehenden Ansprüche, wobei das Gebläsegehäuse (62) auch eine Platte (68) aufweist, die an der Ablenkplatte (66) befestigt ist, um den Ventilator (64) innerhalb der Ausnehmung (80) zu umschließen.

## Revendications

1. Scie (10) comprenant :
un boîtier (12) ayant un premier (32) et un second (36) évent ;
un moteur (16) disposé dans le boîtier et comprenant un élément stationnaire (44) et un élément rotatif (42) ;
un ventilateur (64) fixé à l'élément rotatif et tournant avec celui-ci par rapport au boîtier ; et
un boîtier de soufflerie (62) disposé dans le boîtier et comprenant une chicane (66), la chicane comprenant une tige (70), un corps (72) et une goulotte (74), la tige s'engageant sur l'élément stationnaire du moteur et comprenant une ouverture (82) qui la traverse, la corps comprenant une cavité (80) en communication avec l'ouverture et la goulotte, le ventilateur pouvant tourner à l'intérieur de la cavité ;
dans laquelle le boîtier et le boîtier de soufflerie coopèrent pour définir un trajet d'écoulement d'air à travers lequel de l'air est refoulé par le ventilateur en service, le trajet d'écoulement d'air s'étendant du premier évent entre les éléments stationnaire et rotatif du moteur et à travers chacune ou chacun de l'ouverture, de la cavité, de la goulotte et du second évent ;
**caractérisée en ce que** la tige (70), le corps (72) et la goulotte (74) forment un corps monolithique.

2. Scie (10) selon la revendication 1, dans laquelle la goulotte (74) s'étend du corps (72) de manière sensiblement tangentielle.

3. Scie (10) selon la revendication 1 ou la revendication 2, dans laquelle au moins une partie de la goulotte (74) s'étend en courbe au moins en partie autour d'un axe de rotation du ventilateur (64).

4. Scie (10) selon l'une quelconque des revendications précédentes, dans laquelle au moins une partie de la goulotte (74) s'étend en courbe s'écartant d'un plan dans lequel le ventilateur (64) est agencé pour tourner.

5. Scie (10) selon l'une quelconque des revendications précédentes, comprenant en outre un élément de support (48) disposé dans le boîtier (12) et supportant une première extrémité de l'élément rotatif (42) pour une rotation par rapport au boîtier, dans laquelle l'élément stationnaire (44) est pris en sandwich entre la chicane (66) et l'élément de support et vient en contact direct avec eux.

6. Scie (10) selon la revendication 5, comprenant en outre une pluralité d'attaches (77) qui s'engagent directement sur la chicane (66) et s'engagent directement sur l'élément de support (48).

7. Scie (10) selon la revendication 6, dans laquelle l'élément stationnaire (44) coopère avec l'élément rotatif (42) pour définir un passage annulaire et dans laquelle les attaches (77) s'étendent à travers le passage annulaire.

8. Scie (10) selon l'une quelconque des revendications 5 à 7, dans laquelle l'élément de support (48) supporte un palier (49) qui supporte à rotation l'arbre d'entraînement (46).

9. Scie (10) selon l'une quelconque des revendications précédentes, comprenant en outre une lame (22) agencée pour être entraînée par le moteur (16), dans laquelle une sortie (84) de la goulotte (74) et le second évent (36) sont en regard d'un emplacement qui est radialement externe par rapport à un tranchant radialement externe de la lame.

10. Scie (10) selon l'une quelconque des revendications précédentes, dans laquelle le ventilateur (64) est disposé à une première extrémité longitudinale du moteur (16) et le premier évent (32) est disposé adjacent à une seconde extrémité longitudinale du moteur.

11. Scie (10) selon l'une quelconque des revendications précédentes, dans laquelle l'élément stationnaire (44) est un élément annulaire entourant l'élément rotatif (42) et dans laquelle l'élément stationnaire et l'élément rotatif définissent un passage annulaire à travers lequel l'air s'écoule en réponse à la rotation du ventilateur (64).

12. Scie (10) selon l'une quelconque des revendications précédentes, dans laquelle le boîtier de soufflerie (62) comprend également une plaque (68) qui est fixée à la chicane (66) pour enserrer le ventilateur (64) dans la cavité (80).
